# EUROPEAN PATENT APPLICATION

(11) **EP 4 092 160 A1**
(43) Date of publication of application: **23.11.2022**
(21) Application number: 21175282.9
(22) Date of filing: 21.05.2021
(51) Int. Cl.: C25B 1/04, B01D 19/00, C25B 15/08, C25B 9/00

(54) **METHOD FOR PROVIDING A GAS, SEPARATOR, AND ELECTROLYZER WITH SEPARATOR**

(71) Applicant: Hitachi Zosen Inova AG, 8005 Zürich (CH)
(72) Inventor: Fandino, Vicente, 70565 Stuttgart (DE); Haegele, Christian, 70565 Stuttgart (DE); Hering, Alfred, 70565 Stuttgart (DE); Schneider, Adrian, 8005 Zürich (CH)
(74) Representative: Leinweber & Zimmermann

(57) **Abstract**

The invention relates to a method for providing a gas, in particular one of hydrogen and oxygen, by natural separation from a liquid containing the gas, in particular from the electrolyte of an electrolysis, in a separation zone within a vessel, wherein the separation zone comprises a flow of the liquid on a surface arranged in the vessel, the velocity field of said flow having a vorticity and/or one or more changes in its direction component orthogonal to gravity.

## Description

The invention is in the field of electrolysis, in particular in the field of alkali-electrolysis. When performing alkali-electrolysis, in particular alkali-electrolysis of water, oxygen and hydrogen generated by electrolysis are contained in the electrolyte and then separated from the electrolyte. The invention in particular relates to a method for providing a gas, in particular one of hydrogen and oxygen, by natural separation from a liquid containing the gas, in particular from the electrolyte of an electrolysis, in a separation zone within a vessel. "Natural or passive separation" means a separation based on uplift and emersion of gas in/from the liquid against gravity due to its lower specific weight than that of the electrolyte, which could be, f.i., KOH_{aq}.

Known electrolyzer systems thereto have an electrolyte circulation which passes through a separator vessel. The electrolyte fills the vessel up to a fill level, f.i. half of the overall height of the vessel, which is often of elongated form, as an elongated cylinder with horizontal cylinder axis. During the time the electrolyte remains in the vessel, natural separation occurs and the gas (oxygen or hydrogen) emerges from the liquid and raises upwards to be channelled outside the vessel and collected after some post-treatment.

While such separation in the art is provided with a high level of ease of construction and satisfying separation quality level, the object underlying the invention is to provide a reasonable compromise between still satisfying separation quality level, ease of manufacture, and construction space management.

To this end, the invention provides for a method as initially discussed, which is essentially characterized in that the separation zone comprises a flow of the liquid on a surface arranged in the vessel, the velocity field of said flow having a vorticity and/or one or more changes in its direction component orthogonal to gravity.

Contrary to prior art systems, where the separation zone is the filling of the vessel up to a fill level, separation takes place already during the liquid flow on said surface, providing additional dwell time for the liquid to increase early separation. Moreover, since the velocity field of said flow has a vorticity and/or one or more changes in its direction component orthogonal to gravity, a compact separator vessel is achieved for a given overall area of the surface whereon the liquid flows. This allows in particular elongated constructions orthogonal to gravity and thereby improves also flexibility in arranging the separator within an overall electrolysis system.

Preferably, the surface is continuous and contains, at least in part, a surface normal direction component orthogonal to gravity, allowing the liquid to descend to lower height levels. In other embodiments, the liquid flow may comprise sections of free falling liquid, f.i. from one height level of the surface to the next height level. In one embodiment, the velocity field may have vorticity. To this end, the surface could be arranged in the form of a spiral chute, respectively in the form of a helix-like arrangement with a plurality of spiral windings. Hereto, a single thread chute is preferred, a multi-thread chute is alternatively taken into consideration.

In a preferred embodiment, the overall area of the (guiding) surface exceeds the area of its projection orthogonal to gravity by a factor of at least 2, preferably at least 3, in particular at least 4. However, it is also envisaged that said exceeding may be by a factor of more than 6, preferably more than 8, in particular more than 10. This shifts, assuming similar dwelling times during the liquid flow, constructions base from orthogonal to gravity into parallel to gravity.

In this connection, it is preferred that said surface guides the flow over a height level of at least 20%, preferably at least 30%, in particular at least 40% of a fill level of the liquid in the vessel (below the surface arrangement) and/or of the overall height of the vessel.

In one envisaged embodiment, the specific volume flow in [cm·m/s] is at least partly larger than 1.2, preferably larger than 1.6, in particular larger than 2.0, in particular in working conditions of maximized volume flow. As usually, the specific volume flow (q) is defined by the overall volume flow Q divided by the width of the flow (which may vary over the flow). In a further envisaged embodiment, said specific volume flow may be lower than 4.2, preferably than 3.6, in particular lower than 3.0 (again in particular in working conditions of maximized volume flow of the electrolysis system having the electrolyte circulation).

In a further envisaged embodiment, the ratio of the flow length in flow direction to flow width, averaged over the overall flow length, is larger than 8, preferably larger than 12, in particular larger than 16. This provides, in particular in connection with the specific flow values above, for a reasonable interplay of flow velocity, dwelling time, and liquid level over said surface in the electrolyte flow.

The surface may comprise portions with horizontal (flat) surface, that is with a surface normal vector parallel to gravity. However, different height levels within the vessel may also be reached by a continuously descending height level of the surface. To this end, it is also envisaged that at least partially, the flow may have a ratio between vertical flow component and flow component orthogonal to gravity, for a center flow line with respect to the flow width direction of lower than 1/8, preferably lower than 1/10, in particular lower than 1/12, and/or larger than 1/100, preferably larger than 1/80, in particular larger than 1/50. This may reduce or eliminate the creation of disturbing turbulences, which otherwise could bring the gaseous phase, f.i. in form of bubbles, again closer to the surface area than the level they might have already ascended directed to the liquid level over surface.

In a preferred embodiment, as seen in a gravitational axial sectional view, there are at least 2, preferably at least 4, in particular at least 6 height levels of the surface at the same location in projection orthogonal to gravity.

In a further preferred embodiment, the area of the projection of the surface orthogonal to gravity is lower than the cross-sectional area orthogonal to gravity of the interior of the vessel. Thereby, remaining space (in projection) is available which can be used for f.i. a degassing channel.

Namely, while it is an envisaged embodiment that at least part or even all of the separated gas moves backward with respect to the fluid flow (when the top of a surface at a height level is seen as surface height level under consideration for the flow), the bottom of the guiding face above may act as guiding surface for the gas (back flow for gas emerging on the height level under consideration).

Alternatively or additionally, at least part of the separated gas may move also vertically, in particular in a collected manner and in particular centrally and/or laterally with respect to the surface.

In a preferred embodiment, the separation zone comprises further the filling of the vessel up to a fill level. In flow direction of the electrolyte circulating flow, the flow on the surface forms a first (zigzag-)sub-zone of the separation zone, and the filling of the vessel up to a fill level forms a second sub-zone of the separation zone. It is also envisaged to have, within an electrolysis system, two separators, in particular even both constructed according to one or more of the above features of the surface/electrolyte flow. There might further be a fill-level adjusting mechanism providing, by pressure exchange, for the same fill level height in both vessels.

In a further envisaged embodiment, the liquid flow is influenced by punching and/or cutting elements. These elements may protrude into the fluid flow from one or more of the surface itself, the underside of the next-higher level (ceiling) and side confinement of the flow and serve to punch or cut bubbles of the gaseous phase in the liquid to improve their ascending and emerging from the liquid. For instance, a plurality of punching and/or cutting elements could be arranged in the form of a rake. Such rake could be moved relative to the surface, however, for ease of construction, static punching and/or cutting elements can be provided. Preferably, said punching and/or cutting elements have a dimension in flow width direction which is 5%, in particular even lower than 3%, or even lower than 2% of the flow width where they are arranged (the overall volume flow Q is the specific volume flow q integrated over the flow width direction from one to the other side limitation).

After collecting and channelling the gas out of the vessel, the gas provision may comprise further cleaning and/or drying steps after separation, which can be effected outside of the vessel and which are generally known to the person skilled in the art.

While the flow in the vessel guided by the surface has been described by now as (connected) singular flow, it is to be understood that the invention encompasses also liquid flows where a liquid flow is partly or totally divided in one or more parallel flows. However, one (connected) single flow is preferred.

In terms of devices, the invention provides a separator for separating a gas, in particular one of hydrogen and oxygen, by natural separation from a liquid containing the gas, in particular from the electrolyte of an electrolysis, in a separation zone within a vessel of the separator, said separator being essentially characterized by an internal structure in the interior of the vessel, said internal structure comprising a guiding surface for guiding a flow of the liquid flowing thereon to have a velocity field with vorticity and/or one or more changes in its direction component orthogonal to gravity.

It is to be understood that all details and features described above with respect to the method and the surface apply as preferred features also for the separator and its guiding surface. Regarding the change of direction, there maybe arise essentially 180° flow direction changes, such that in an extreme variant there is a zigzag-flow. Another variation in form of a continuous change of flow direction has an example for a velocity field having a vorticity (tornado-like when seen orthogonal to gravity, but with continuous or discontinuous descending towards the bottom of the vessel). However, also embodiments incorporating both or a mixture of these embodiments are contemplated, as f.i. a sequence of straight flows connected via angle portions of 90° flow direction change as f.i. used within a rectangular cross-section, or other geometrical forms.

The vessel may be a pressure vessel with cylindrical outer shape and cylinder axis with major direction component parallel to gravity, in particular with vertical cylinder axis. It is, however, understood that even when using cylindrical vessels, the form of the projection of the surface orthogonal to gravity (respectively the area of the internal structure) may be different and could, in a possible embodiment, be of polygonal form. Thereby, the space between a polygonal side and the corresponding arc of the cylindrical interior of the vessel border can be used for channelling the separated gas to the top (and then outside of) the vessel. Alternatively and/or additionally, oblique or in particular vertical tubes could be provided which run through the surface in its different height levels and serve to collect the separated gas. To this end, openings can be provided in the separation walls of such degassing channels in the separator. It is understood that the height level of a degassing opening into the degassing channel is higher than the liquid level over surface of the adjacent flow space.

After flowing along the surface, the liquid falls (or is guided) down into the filled bottom region of the vessel. Thereto, it is preferred that a fill level of the liquid in the vessel is at least 10%, preferably at least 25%, in particular at least 40% of the overall height of the vessel. Additionally, the height interval in which said guiding surface guides the flow is at least 20%, preferably at least 30%, in particular at least 40% of the fill-level of the liquid in the vessel and/or of the overall height of the vessel.

Further, it is preferred that there is a safety height margin between the lower end of the guiding surface and the fill-level of the liquid filled in the bottom area of the vessel to safely avoid a backlog/backwater of the liquid into the separation zone formed by the guiding surface.

In a further preferred embodiment, one dimension and/or the maximum dimension of the vessel orthogonal to gravity is not larger than 2.4 m, preferably not larger than 1.8 m, in particular not larger than 1.3 m, even not larger than 1.2 m. Moreover, the overall height of the vessel is preferably less than 2.8 m, preferably less than 2.72 m, in particular less than 2.66 m.

In one preferred embodiment, at least part, in particular the overall of the guiding surface is arranged in form of a spiral coil (spiral sheet) and/or comprises several, in particular connected, height levels of in particular planar extension.

Further, the invention provides an electrolysis system for alkali-electrolysis, comprising at least one electrolyzer and at least one separator according to any of the previously described aspects. In a further preferred embodiment, the electrolyzer is of the staple-type, comprising at least 40, preferably at least 60, in particular at least 80 cells. In a further preferred embodiment, the separator is connected to a plurality of electrolyzers of the staple-type, preferably to 2, 3, or 4 electrolyzers.

In a preferred arrangement, the electrolysis system comprises a contained arrangement with at least one container at at least one separator in accordance with any of the previously cited features which is arranged in said at least one container.

In a further preferred embodiment, the length of the container is larger than the width of the container, and two separators, at least one, preferably both of them having the above described features of the invention are commonly arranged in said at least one container, preferably adjacent to each other in the width direction of the container.

Further features, details, and advantages of the invention result from the subsequent description with reference to the accompanying figures, in which
Fig. 1 schematically shows a separator according to a first embodiment,
Fig. 2 schematically shows a separator according to a second embodiment,
Fig. 3 schematically shows an electrolysis system having two separators in a simplified representation,
Fig. 4 shows a punching and/or cutting arrangement, and
Fig. 5 schematically shows a container housing two separators.

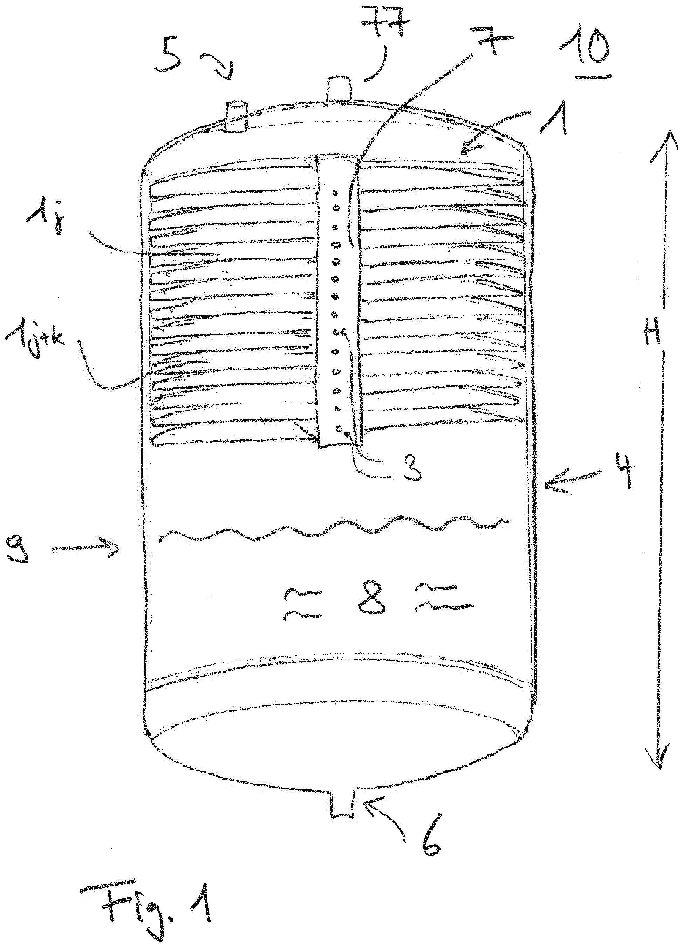

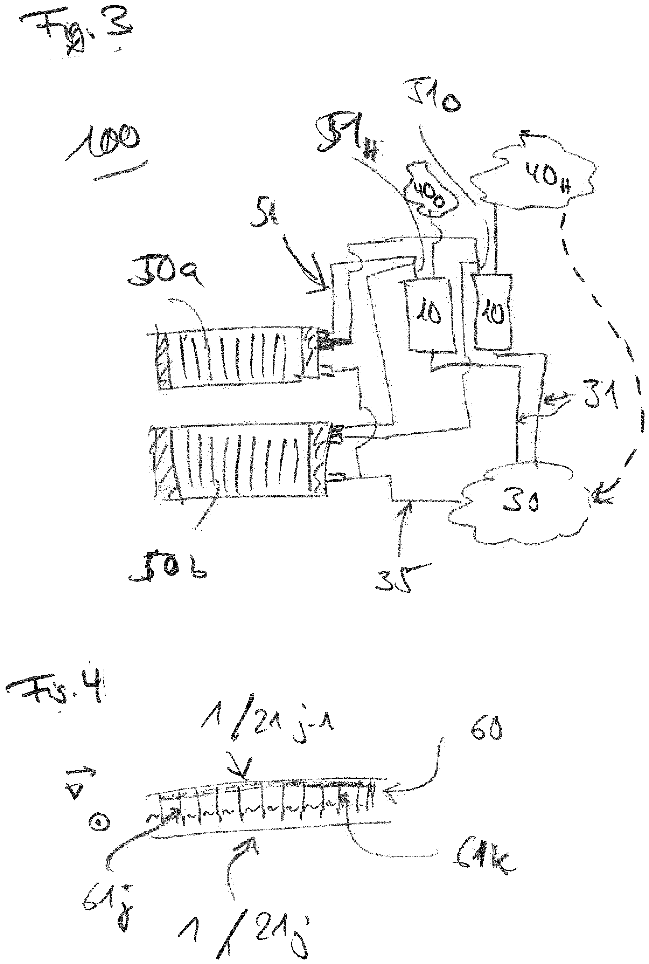

A separator 10 shown in Fig. 1 of height H is intended to be placed into an electrolyte circuit of an electrolysis system (Fig. 3), the separator 10 having fluid inlet 5 on the upstream side and fluid outlet 6 on the downstream side. During use of the system, the electrolyte 8 stands in the bottom region of vessel 4 up to a fill level 9.

Electrolyte 8 entering via inlet 5 does not reach said bottom portion by freely falling downwards. Rather, the electrolyte is guided via a guiding surface 1 under formation of a velocity field of the flow downwards to approximately half of the overall height of vessel 4. Said velocity field has vorticity, and the guide surface 1 is formed as spiral chute.

In the view of Fig. 1 one recognizes that, for a location defined in the vessel with coordinates r, ϕ defining a point in a projection plane orthogonal to the cylinder axis of vessel 4, which is the vertical axis, the guide surface has for one and the same such defined point several height levels 1j, 1j+k of, in this embodiment, a total of 14 height levels. The guide surface 1 can be made from a sheet metal, and there is a spacing of preferably between 5 cm and 15 cm between adjacent height levels.

In the upper part of vessel 4, a degassing tube 7 is provided. Degassing tube 7 is open at its lower end to allow gas (for the exemplified embodiment: hydrogen) separated from liquid 8 in the bottom zone to reach the top zone of the separator, while also hydrogen separated from the electrolyte flow flowing along the guide surface 1 can enter degassing tube 7 via openings 3 provided therein above the liquid level over surface of guiding surface 1. While in Fig. 1 only a lower number of openings 3 is indicated, it is to be understood that there can be more of them spirally arranged in the wall of degassing tube 7. Moreover, the form of the holes 3 can be varied, there can be slits, extended holes, or whatever kind of opening is intended to provide a communication between the first separation zone provided by the electrolyte flow along guiding surface 1 to the interior of degassing tube 7 (above liquid level over surface, respectively suitably protected against liquid entry). Any gas accumulating above the height level of the first height level of guide surface 1 as seen from the upstream side leaves the vessel 4 via gas outlet 77. The liquid 8 leaves vessel 4 by fluid exit 6 for electrolyte circulation on the basis of the set volume flow Q.

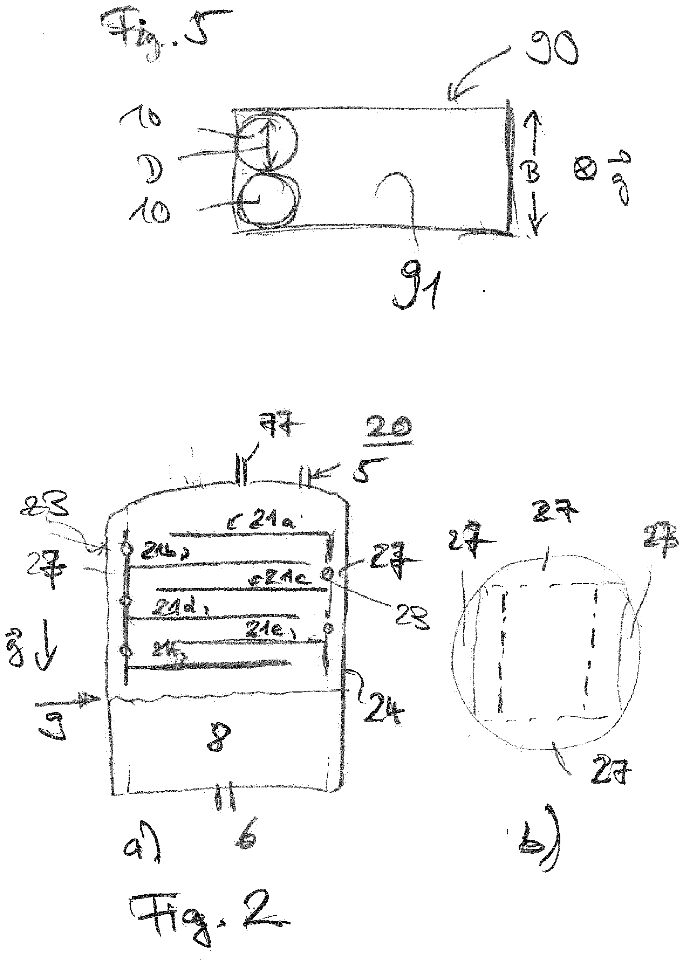

According to another embodiment shown in Fig. 2, guiding surface 21a to 21f of separator 20 is arranged in vessel 24 for zigzag-flow of the electrolyte starting with flow from the right to the left in Fig. 2a on surface 21a and ending after zigzagging with flow from the left to the right on surface 21f. It is understood that the number of, as in the shown embodiment, 6 height levels is just an exemplary choice and one could use a lower or higher number of height levels. For this subject embodiment, as is visualized in Fig. 2b, vessel 24 is still of cylindrical form with vertical cylinder axis. The surfaces 21a to 21f are of rectangular form, and a space 27 between the housing of vessel 24 and the guiding surface arrangement is used as degassing channel to provide for a total of here 4 degassing channels 27 (Fig. 2b). Thereto, holes/openings 23 are provided in separating walls to channels 27. Other aspects are similar to those in Fig. 1 and their repeated description is omitted.

As further (not shown) alternative embodiment with respect to Fig. 2, one could provide for a continuous crossover between two subsequent surfaces 21j and 21j+1 in form of ramps/chutes to replace the discontinuous crossover as shown in Fig. 2a.

It is further understood that localization of degassing passages can be made differently than that shown in Figs. 1 and 2 to provide appropriate possibility for the separated gas to raise in the respective vessel 4, 24 in order to reach gas outlet 77.

The schematic view of Fig. 3 shows two separators 10, 10, one for oxygen separation and one for hydrogen separation connected to the respective fluid outlets of electrolyzers 50a, 50b. Circulation of electrolyte is completed via additional components of 30 of electrolyte circuit and respective connections 31, 35 to fluid inlets of electrolyzers 50a, 50b, as they are known in the art, as well as post treatment 400 of the gas separated from the fluid and also known in the art. That is, the detail level of Fig. 3 is just to visualize the cooperation of separators 10, 10 in an electrolysis arrangement 100 having 2 electrolyzers 50a, 50b of the staple-type, omitting details of the electrolyzers and other components of the system.

In Fig. 4, a rake 60 is shown in relationship to two subsequent height levels 1j-1, 1j of chute 1 (Fig. 1), respectively 21j-1, 21j (Fig. 2), having pin-like plates 61j, 61k descending versus the lower height level of surface 1/21j, plunging into the liquid flow for increased uplift of the gaseous phase in the liquid. The flow direction v in Fig. 4 is perpendicular to the paper plane. It is to be understood that such punching/cutting elements 61j, 61k could also be arranged differently and distributed in a suitable mesh over the surface 1/21a-f.

In the schematical view of Fig. 5, a cross-sectional view orthogonal to gravity g is shown. Adjacent in width direction of container 90, two separators 10, 10 with diameter D are arranged adjacent to each other, leaving space 91 with full width B of the container for other elements of electrolyzer system 100. It is to be understood that electrolyzer system 100 may comprise a plurality of containers 90, comprising among other the electrolyzers 50.

The invention is not limited by details shown in the figurative embodiments. Rather, features of the above description as well as of the subsequent claims can, alone-standing or in combination, be essential for the invention.

## Claims

1. Method for providing a gas, in particular one of hydrogen and oxygen, by natural separation from a liquid (8) containing the gas, in particular from the electrolyte of an electrolysis, in a separation zone within a vessel (4; 24),
**characterized in that** the separation zone comprises a flow of the liquid on a surface (1; 21a-f) arranged in the vessel, the velocity field of said flow having a vorticity and/or one or more changes in its direction component orthogonal to gravity.

2. Method according to claim 1, wherein said surface guides the flow over a height interval of at least 20%, preferably at least 30%, in particular at least 40% of a fill level of the liquid in the vessel and/or of the overall height (H) of the vessel.

3. Method according to claim 1 or 2, wherein the specific volume flow in [cm·m/s] is at least partly larger than 1.2, preferably larger than 1.6, in particular larger than 2.0.

4. Method according to any of the preceding claims, wherein a ratio of the flow length in flow direction to flow width, averaged over the overall flow length, is larger than 8, preferably larger than 12, in particular larger than 16.

5. Method according to any of the preceding claims, wherein, as seen in a gravitational axial sectional view, there are at least 2, preferably at least 4, in particular at least 6 height levels (1j; 1j+k) of the surface at the same location as seen in projection orthogonal to gravity.

6. Method according to any of the preceding claims, wherein at least part of the separated gas flows backward with respect to the fluid flow above fluid level over the surface.

7. Method according to any of the preceding claims, wherein at least part of the separated gas moves in a collected manner and in particular vertically, and seen in projection orthogonal to gravity in particular centrally and/or laterally with respect to the surface.

8. Method according to any of the preceding claims, wherein the separation zone further comprises the filling of the vessel up to a fill level.

9. Method according to any of the preceding claims, wherein the flow on the surface is influenced by punching and/or cutting elements (61j, 61k).

10. Method according to any of the preceding claims, wherein the gas provision comprises cleaning and/or drying steps of the separated gas, in particular outside the vessel.

11. Separator (10; 20) for separating a gas, in particular one of hydrogen and oxygen, by natural separation from a liquid containing the gas, in particular from the electrolyte of an electrolysis, in a separation zone within a vessel of the separator, **characterized by** an internal structure (1, 7, 3; 21a-f, 27, 23) in the interior of said vessel, said internal structure comprising a guiding surface (1; 21a-f) for guiding a flow of the liquid thereon to have a velocity field with vorticity and/or one or more changes in its direction component orthogonal to gravity.

12. Separator according to claim 11, wherein said guiding surface extends over a height interval of at least 20%, preferably at least 30%, in particular at least 40% of a fill level of the liquid in the vessel and/or of the overall height of the vessel.

13. Separator according to claim 11 or 12, wherein one and/or the maximum dimension (D) of the vessel orthogonal to gravity is not larger than 2.4 m, preferably not larger than 1.8 m, in particular not larger than 1.3 m.

14. Separator according to any of claims 11 to 13, wherein at least part of the guiding surface is arranged in form of a spiral coil and/or comprises several, in particular connected, height levels of in particular horizontal extension.

15. Electrolysis system (100) for alkali electrolysis, comprising at least one electrolyzer (50a, 50b), in particular of the staple-type, and a separator (10, 10) configured according to any of the claims 11 to 14.

16. Electrolysis system according to claim 15, comprising a contained arrangement with at least one container (90) and a separator (10, 10) configured according to any of claims 11 to 14 arranged in the container.
